(19) Europäisches Patentamt
European Patent Office
Office européen des brevets

(11) Veröffentlichungsnummer: **0 388 730 B1**

(12) **EUROPÄISCHE PATENTSCHRIFT**

(45) Veröffentlichungstag der Patentschrift: **01.12.93**

(51) Int. Cl.5: **C08G 69/42**, C08G 77/42, C09J 177/00

(21) Anmeldenummer: **90104503.9**

(22) Anmeldetag: **09.03.90**

# (54) Polyamid-Siloxan-Copolymer.

(30) Priorität: **18.03.89 DE 3908954**

(43) Veröffentlichungstag der Anmeldung:
**26.09.90 Patentblatt 90/39**

(45) Bekanntmachung des Hinweises auf die Patenterteilung:
**01.12.93 Patentblatt 93/48**

(84) Benannte Vertragsstaaten:
**AT BE CH DE DK ES FR GB GR IT LI LU NL SE**

(56) Entgegenhaltungen:
**FR-A- 1 566 930**
**US-A- 3 598 783**

(73) Patentinhaber: **Elf Atochem Deutschland GmbH**
**Uerdinger Strasse 5**
**D-40474 Düsseldorf(DE)**

(72) Erfinder: **De Jong, Eduard**
**Mirabellengarten 3**
**D-5210 Troisdorf-Eschmar(DE)**
Erfinder: **Hapelt, Karl-Heinz**
**Im Ellig 67**
**D-5300 Bonn 1(DE)**
Erfinder: **Knipf, Helmut**
**Gärtnerstrasse 34**
**D-5353 Strempt Mechernich(DE)**

(74) Vertreter: **Türk, Gille, Hrabal, Leifert**
**Brucknerstrasse 20**
**D-40593 Düsseldorf (DE)**

EP 0 388 730 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Polyamid-Siloxan-Copolymer, das durch gemeinsame Kondensation und Polymerisation von ω-Amino-Alkylcarbonsäuren mit 6, 11 oder 12 Kohlenstoffatomen und/oder deren Lactamen, von Diaminen und copolymerisierbaren Siloxanmonomeren sowie Dicarbonsäuren erhältlich ist, wobei die polyamidbildenden Diamine und Siloxanmonomere einerseits und die Dicarbonsäuren andererseits in äquimolaren Mengen vorliegen, Verfahren zu seiner Herstellung und dessen Verwendung, insbesondere als Heißschmelzkleber für Textilien.

In der Textilindustrie finden Heißschmelzkleber bei der Verklebung von textilen Materialien breite Verwendung. In den meisten Fällen werden die zu verklebenden Textilien mit Beschichtungsmitteln versehen, die dem Gewebe beispielsweise einen besseren Griff geben oder sie wasserabstoßend machen. Letztere Eigenschaft wird durch Siliconisieren des Gewebes erreicht. Diese Art der Beschichtung hat jedoch eine Verringerung der Hafteigenschaften der Heißschmelzkleber auf dem beschichteten Gewebe zur Folge. Versuche zur Verbesserung der Haftung auf siliconisierten Stoffen wurden in der DE-B-29 20 416 und DE-A-32 48 776 veröffentlicht.

DE-B-29 20 416 beschreibt einen pulverförmig einsetzbaren Schmelzkleber zum Heißsiegeln von Textilien, der aus einem Gemisch von ausgewählten Copolyamiden mit höherem und niedrigerem Schmelzpunkt in bestimmten Anteilen besteht.

In der DE-A-32 48 776 werden neben Lactamen $C_6$ bis $C_{12}$Dicarbonsäuren und aliphatische $C_6$ bis $C_{12}$Diamine verwendet, wobei mindestens 30 Gew.-% dieser Diamine aus einfachverzweigten aliphatischen Diaminen mit 6 Kohlenstoffatomen bestehen.

Eine Verbesserung der Hafteigenschaften an siliconisiertem Gewebe wird in der DE-A-37 30 504 offenbart, worin Copolyamide aus Caprolactam, Laurinlactam und einem Addukt aus äquimolaren Mengen Piperazin und $C_6$ bis $C_{13}$Dicarbonsäuren oder $C_{36}$dimerisierten Fettsäuren beschrieben sind, die als Heißschmelzkleber verwendet werden können.

Cokondensate von Polyamiden mit bestimmten organofunktionellen Polysiloxanen sind bekannt. So werden in der US-A-4 346 200 die verbesserte Zugfestigkeit und Kerbschlagzähigkeit von Formmassen aus Polyamiden und elastomeren Blockcopolyamiden beschrieben, wobei deren Elastomersegmente auch Poly-$C_1$ bis $C_4$-Dialkylen-Siloxane enthalten. Nach EP-A-54 426 und DE-A-2 120 961 lassen sich die Oberflächeneigenschaften und Verarbeitbarkeit von Polyamiden durch den Einbau von Siloxansequenzen günstig beeinflussen.

Die DE-A-35 45 905 beschreibt die Ester- oder Amid-Verknüpfung von Polyamid- und Siloxanblöcken mit einer maximalen $(SiR_2O)_n$ Kettenlänge von n = 50 (gegebenenfalls sind mehrere dieser Blöcke über Sauerstoff und organische Reste zu längeren Einheiten verknüpft), zu Polymeren mit einem I-Wert von 10 bis 600, die unter anderem zu verbesserter Festigkeit, Hydrolyse- und Chemikalienbeständigkeit in den Polymeren führen soll.

Die EP-A-269 833 offenbart thermoplastische Polyamidmassen aus Copolyamiden, die relat v langkettige Polydiorganosiloxancarbonamid-Einheiten eingebaut enthalten, bei welchen die organofunktionellen Reste über Sauerstoff an die Siloxanreste gebunden sind.

Alle zuvorgenannten Schriften offenbaren die Verwendung von oligomeren Basiskomponenten, und ihnen lagen andere Aufgabenstellungen zugrunde, als der vorliegenden Erfindung.

Das Problem der verschlechterten Hafteigenschaften der Copolyamide an siliconisierten und andersartig beschichteten Stoffen war bisher noch nicht zufriedenstellend gelöst.

Aufgabe der vorliegenden Erfindung ist es, einen Heißschmelzkleber bereitzustellen, der gute Haftfestigkeiten der verklebten Gewebe, die insbesondere beschichtet sein können, bei Naßwäsche und chemischer Reinigung bei niedrigen Auftragsgewichten und niedrigem Bügelplateau ermöglicht. Ein niedriges Auftragsgewicht und ein niedriges Bügelplateau führen dazu, daß die Anzahl der Stoffe, die miteinander verklebt werden können, vergrößert wird, da sich durch niedrige Temperaturen und geringe Drücke hitze- und druckempfindliche Materialien verarbeiten lassen, die insbesondere beschichtet sein können.

Gegenstand der vorliegenden Erfindung sind Polyamid-Siloxan-Copolymere, die erhältlich sind durch gemeinsame Kondensation und Polymerisation auf an sich bekannte Weise von ω-Amino-Alkylcarbonsäuren mit 6, 11 oder 12 Kohlenstoffatomen und/oder deren Lactamen, von polyamidbildenden Diaminen und copolymerisierbaren Monomeren oder Gemischen von Monomeren der Formel I, sowie Dicarbonsäuren:

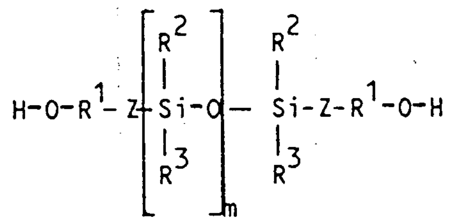

(I)

wobei in I
$R^1$ einen divalenten Alkylrest mit 2 bis 36 Kohlenstoffatomen, der geradkettig oder verzeigt sein kann, oder einen $C_1$ bis $C_4$ Polyoxyalkylenrest mit einem zahlenmittleren Molekulargewicht von 50 bis 3000 bedeutet, $R^2$ und $R^3$, die gleich oder verschieden sein können, Wasserstoff, Benzyl, das mit einem geradkettigen, cyclischen oder verzweigten niederen Alkylrest mit 1 bis 6 Kohlenstoffatomen substituiert sein kann, oder einen cyclischen, geradkettigen oder verzweigten niederen Alkylrest mit 1 bis 6 Kohlenstoffatomen bedeuten, m eine ganze Zahl von 1 bis 50 bedeutet und Z eine direkte Bindung oder Sauerstoff bedeutet, und wobei die polyamidbildenden Diamine und Verbindungen der Formel I einerseits und die Dicarbonsäuren andererseits in äquimolaren Mengen vorliegen und 0.5 bis 15 gew.% bezogen auf das Gesamtgewicht der eingesetzten Komponenten im Ausgangsgemisch an Verbindungen der Formel I anstelle der entsprechenden äquivalenten Menge der Diamine vorhanden sind.

Gemeinsame Kondensation und Polymerisation auf an sich bekannte Weise bedeutet hierbei, daß die Ausgangskomponenten in den entsprechenden Mengenverhältnissen im Reaktionsgefäß vorgelegt werden und unter den bei der Herstellung von Polyamiden üblichen Weise kondensiert und polymerisiert werden, so daß sich eine statistische Verteilung der einzelnen Monomerbestandteile über das Polymermolekül ergibt. Dabei können die Ausgangskomponenten auch in den entsprechenden Mengenverhältnissen in einer wäßrigen Dispersion, bzw. in Form einer wäßrigen Lösung eingesetzt werden. Die benutzten Techniken und Verfahrensschritte sind auf dem Gebiet der Polyamidsynthesen üblich. Es wird dabei unter den üblichen Reaktionsbedingungen der Temperatur und des Druckes gearbeitet. Bevorzugt wird dabei die Vorkondensationsphase bei dem sich im Autoklaven als Reaktionsgefäß einstellenden Druck bei Temperaturen von 220 bis 300 °C durchgeführt, die Nachkondensationsphase bei gleichbleibenden Temperaturen unter Normaldruck. Als Vorkondensationsphase wird dabei die Phase der Reaktion bezeichnet, innerhalb der die Kondensation und Polymerisation der Ausgangskomponenten bis zu einem bestimmten Polymerisationsgrad abläuft und die Reaktion unter den Reaktionsbedingungen im Reaktionsgefäß stoppt, im Reaktionsgemisch aber noch nicht abreagierte Ausgangskomponenten als Monomere oder Oligomere vorliegen. Die Nachkondensationsphase ist die sich an die Vorkondensationsphase bis zum vollständigen Ablauf der Kondensation und Polymerisation bis zum gewünschten Molekulargewicht ablaufende Phase.

Erfindungsgemäß können als ω-Amino-Alkylcarbonsäuren mit 6, 11 oder 12 Kohlenstoffatomen beispielsweise Aminocapronsäure, 11-Aminoundecansäure und 12-Aminododecansäure und/oder deren Lactame verwendet werden.

Als Diamine sind erfindungsgemäß cyclische und acyclische aliphatische Diamine, sowie dicyclische aliphatische Diamine, deren Ringe über verzweigte oder gradkettige Alkylenreste mit 1 bis 6 Kohlenstoffatomen verknüpft sein können, verwendbar. Beispiele sind Hexamethylendiamin, Piperazin, Isophorondiamin, Dodecandiamin, Methylpentamethylendiamin, Trimethylhexamethylendiamin sowie Di(4-Aminocyclohexyl)-methan, 1,2-Di(4-Aminocyclohexyl)ethan, 2,2-Di(4-Aminocyclohexyl)propan.

Als Diamine können erfindungsgemäß auch aromatische Diamine wie Diamino-alkyl-substituiertes Phenyl wie Diamino-p-Xylylen, Orthophenylendiamin, Metaphenylendiamin, Paraphenylendiamin, 4,4'-Diamino-Diphenylmethan, 1,2(4,4'-Diaminodiphenyl)ethan, 2,2(4,4'-Diaminodiphenyl)propan eingesetzt werden.

Die Diamine werden in äquimolarer Menge zu den Dicarbonsäuren eingesetzt. Das bedeutet, daß für jede Aminogruppe der Diaminkomponente eine Carboxyl gruppe in der Dicarbonsäure vorhanden ist.

Als Dicarbonsäuren können die üblicherweise bei der Herstellung von Polyamiden eingesetzten vorzugsweise geradkettigen Dicarbonsäuren verwendet werden. Beispielhaft werden hier genannt Alkylendicarbonsäuren mit 4 bis 10 Methyleneinheiten wie Adipinsäure, Acelainsäure, Sebacinsäure und Decandicarbonsäure, dimerisierte Fettsäuren mit 36 Kohlenstoffatomen, sowie aromatische Dicarbonsäuren wie Phthalsäure, Isophthalsäure und Terephthalsäure.

Anstelle einer entsprechenden äquivalenten Menge der Diamine werden erfindungsgemäß copolymerisierbare Monomere oder Gemische von Monomeren der allgemeinen Formel I eingesetz,

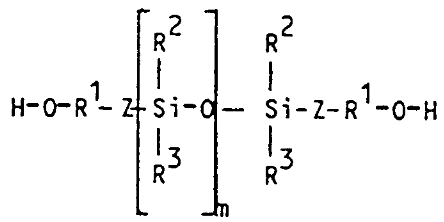

(I)

wobei in I $R^1$ einen divalenten Alkylrest mit 2 bis 36 Kohlenstoffatomen, der geradkettig oder verzweigt sein kann, oder einen $C_1$ bis $C_4$ Polyoxyalkylenrest mit einem zahlenmittleren Molekulargewicht von 50 bis 3000 bedeutet, $R^2$ und $R^3$, die gleich oder verschieden sein können, Wasserstoff, Benzyl, das mit einem geradkettigen, cyclischen oder verzweigten niederen Alkylrest mit 1 bis 6 Kohlenstoffatomen substituiert sein kann, oder einen cyclischen, geradkettigen oder verzweigten niederen Alkylrest mit 1 bis 6 Kohlenstoffatomen bedeuten, m eine ganze Zahl von 1 bis 50 bedeutet und Z eine direkte Bindung oder Sauerstoff bedeutet.

$R^1$ steht vorzugsweise für einen divalenten Alkylrest mit 2 bis 16, mehr bevorzugt 2 bis 12, und noch mehr bevorzugt 2 bis 4 Kohlenstoffatomen in gerader Kette, die jeweils vorzugsweise mit Methylgruppen substituiert sein kann, oder einen $C_1$ bis $C_4$ Polyoxyalkylenrest mit einem zahlenmittleren Molekulargewicht von vorzugsweise 50 bis 1000, mehr bevorzugt von 50 bis 500 und besonders bevorzugt von 50 bis 200. $R^1$ steht bevorzugt für einen divalenten Alkylrest.

Wenn $R^1$ für einen $C_1$ bis $C_4$ Polyoxyalkylenrest steht, dann ist Z bevorzugt Sauerstoff.

$R^2$ und $R^3$ bedeuten bevorzugt Benzyl. Besonders bevorzugt bedeuten $R^2$ Benzyl, das mit einem geradkettigen oder verzweigten niederen Alkylrest mit 1 bis 6 Kohlenstoffatomen substituiert sein kann, und $R^3$ einen geradkettigen oder verzweigten niederen Alkylrest, beispielsweise Methyl, nach einer anderen bevorzugten Ausführungsform bedeuten $R^2$ und $R^3$ je einen niederen Alkylrest mit 1 bis 6 Kohlenstoffatomen, beispielsweise Methyl.

In der Formel I steht m für eine ganze Zahl zwischen den Zahlen 1 und 50, wobei die Grenzwerte eingeschlossen sind. Bevorzugt ist die untere Grenze 5, mehr bevorzugt 10 und ganz besonders bevorzugt 15. Die obere Grenze ist bevorzugt 30, besonders bevorzugt 25. Der Zahlenwert für m wird so ausgewählt, daß eine maximale Obergrenze des zahlenmittleren Molekulargewichts von 3000 nicht überschritten wird. Bevorzugt wird m dabei so ausgewählt, daß das zahlenmittlere Molekulargewicht der Verbindung der allgemeinen Formel I 1500 bis 2500 beträgt.

Wenn $R^2$ und $R^3$ in der allgemeinen Formel I einen niederen Alkylrest mit 5 oder 6 Kohlenstoffatomen oder einen Benzylrest, der gegebenenfalls mit einem niederen Alkylrest mit 1 bis 6 Kohlenstoffatomen substituiert ist, bedeuten, kann das zahlenmittlere Molekulargewicht den zuvorgenannten oberen Grenzwert von 3000 entsprechend überschreiten.

In der obigen allgemeinen Formel I bedeutet Z eine direkte Bindung zwischen dem Siliciumatom und dem Rest $R^1$ der Sauerstoff, bevorzugt ist eine direkte Bindung.

Bevorzugt wird das Polyamid-Siloxan-Copolymer dadurch erhalten, daß 60 bis 90 Gew.-% der $\omega$-Amino-Alkylcarbonsäuren mit 6, 11 oder 12 Kohlenstoffatomen und/oder deren entsprechenden Lactamen, und 10 bis 40 Gew.-% äquimolare Mengen der Diamine und Dicarbonsäuren, wobei 2 bis 6 Gew.-% der copolymerisierbaren Monomeren der allgemeinen Formel I anstelle der entsprechenden äquivalenten Menge der Diamine eingesetzt werden, unter den Bedingungen kondensiert und polymerisiert werden, die üblicherweise bei der Kondensation und Polymerisation von Polyamiden eingesetzt werden. Dazu werden alle Ausgangskomponenten im Reaktionsgefäß vorgelegt, und so wird ein statistisches Copolymer hergestellt.

Bevorzugt wird das Polyamid-Siloxan-Copolymer der vorliegenden Erfindung dadurch erhalten, daß 75 bis 85 Gew.-% der $\omega$-Amino-Alkylcarbonsäuren mit 6, 11 oder 12 Kohlenstoffatomen und/oder deren entsprechenden Lactamen, 15 bis 25 Gew.-% von äquimolaren Mengen der Diamine und $C_4$ bis $C_{10}$-Alkylendicarbonsäuren polymerisiert werden, wobei 2 bis 6 Gew.-% der copolymerisierbaren Monomeren der allgemeinen Formel I anstelle der entsprechenden äquivalenten Menge der Diamine eingesetzt werden.

Beansprucht wird auch ein Verfahren zur Herstellung der Polyamid-Siloxan-Copolymere, wobei die Ausgangskomponenten den zuvor genannten Mengenverhältnissen kondensiert und polymerisiert werden.

Überraschenderweise zeigte die textiltechnische Untersuchung der erfindungsgemäß erhältlichen Polyamid-Siloxan-Copolymere, daß auch bei erhöhter Siegeltemperatur kein Rückschlag des erfindungsgemäß verwendeten Polyamid-Siloxan-Copolymer-Heißschmelzklebers festgestellt. Gleichzeitig wurde nur eine geringe oder gar keine Abnahme der Schälfestigkeit nach dreimaligem Waschen bzw. fünfmaliger Chemischer Reinigung im Gegensatz zu den Ergebnissen der Vergleichsversuche festgestellt.

Mit Hilfe der Polyamid-Siloxan-Copolymere der vorliegenden Erfindung lassen sich beschichtete Textilien, besonders vorteilhaft temperaturempfindliche beschichtete Textilien mit Textilien gleicher oder verschiedener Art verkleben. Zwischen die zu verklebenden Flächen wird ein erfindungsgemäßes Copolymer, zweckmäßig in Form eines Pulvers oder einer Dispersion, wie sie für Heißschmelzkleber üblich ist, gegeben. Anschließend werden die Textilien mit dem erfindungsgemäßen Copolymer unter Anwendung von erhöhter Temperatur verpreßt. Die Preßtemperatur richtet sich dabei in erster Linie nach der Temperaturempfindlichkeit des Substrats. Da die erfindungsgemäßen Copolymere schon bei sehr niedrigen Temperaturen ab etwa 100 °C eine vorzügliche Klebkraft auch bei beschichteten Textilien entwickeln, können sehr niedrige Siegeltemperaturen angewendet werden, die nur geringfügig höher als die Temperaturen des Schmelzbereichs der erfindungsgemäßen Copolymere zu sein brauchen. Beim Erkalten auf Raumtemperatur tritt Verfestigung unter Verbindung der verklebten Textilien ein. Die Copolyamide gemäß der Erfindung können in Form von Pulvern, zum Beispiel mit in der Beschichtungsindustrie üblichen Pulverauftragsmaschinen, oder in Form von Heißsiegeldispersionen nach dem Pastenpunktverfahren auf zu verklebende Textilien aufgebracht werden. Dabei ist es auch möglich, nur ausgewählte Flächenbereiche der Textilien mit dem Copolyamid gemäß der Erfindung zu versehen.

Beispiele für zu verklebende Textilmaterialien sind neben den beschichteten Stoffen auch Naturstoffe wie Wolle, Seide und Baumwolle, bzw. Kunststoffpolyester und Polyamide und diese enthaltende Textilmischgewebe, sowie die entsprechend beschichteten Textilien aus den gleichen Materialien wie zuvor genannt.

Die Verwendung der erfindungsgemäßen Copolymere zum Heißsiegeln von Textilien erfolgt vorzugsweise in Form von Dispersionen. Solche - im wesentlichen wäßrigen - Dispersionen sind auf dem Gebiet der Textil-Heißschmelzkleber allgemein bekannt, vergleiche DE-24 07 505 und die darin als Stand der Technik genannten Druckschriften.

Die folgenden Beispiele erläutern die vorliegende Erfindung.

Die Vergleichsversuche sind unter Verwendung von Reaktionsbedingungen bzw. Reaktionspartnern aus dem nächstliegenden Stand der Technik durchgeführt worden.

**BEISPIELE:**

① In einen geschlossenen mit Rührwerk versehenen Autoklaven wurden folgende Komponenten eingewogen:

3,6 kg Caprolactam
4,4 kg 11-Aminoundecansäure
0,7 kg Hexamethylendiamin
0,9 kg Adipinsäure
0,37 kg Siloxan (OH-terminiertes Polydimethylsiloxan MG 2100 DOW CORNING Q 4-3667)
0,03 kg Adipinsäure

Nach Spülen des Reaktors mit Stickstoff wurde das geschlossene System unter Rühren auf 245 °C aufgeheizt. Dabei stellte sich ein Druck von 6 bar ein, welcher über 2 Stunden gehalten wurde. Nach dieser Vorkondensationszeit wurde der Druck langsam durch Öffnen des Abspaltventiles auf Normaldruck reduziert, und die Masse-Temperatur auf 250 °C erhöht. Anschließend wurde unter leichtem $N_2$-Strom 1,5 Stunden nachkondensiert. Nach der Nachkondensation wurde die Masse durch eine Lochdüse ausgesponnen und granuliert. Das Granulat wurde auf einer Kaltmahlanlage vermahlen und auf einer Siebmaschine in die Fraktionen 0-80 $\mu$m und 80-200 $\mu$m getrennt. Die Pulverfraktion 80-200 $\mu$m wurde textiltechnologisch untersucht. Die anhängende Tabelle gibt die ermittelten Meßwerte wieder.

Beispiel ②

Wie in Beispiel ① beschrieben, wurde ein Polysiloxanpolyamid aus folgenden Komponenten auf gleiche Weise synthetisiert und untersucht:

3,0 kg Caprolactam
4,8 kg Laurinlactam
0,5 kg Piperazin
1,3 kg Decandicarbonsäure
0,36 kg Siloxan Q 4-3667
0,04 kg Decandicarbonsäure

Vergleichsbeispiel ①

Wie in Beispiel ① beschrieben, wurde ein Copolyamid aus den nachfolgenden Komponenten auf gleiche Weise synthetisiert und untersucht:
4,0 kg Caprolactam
4,4 kg 11-Aminoundecansäure
0,7 kg Hexamethylendiamin
0,9 kg Adipinsäure

Vergleichsbeispiel ②

Gemäß der Lehre der DE-35 45 905 wurde ein Polyamid-Siloxan-Copolymer wie folgt synthetisiert. Die Ausgangskomponenten wie in Beispiel ①, ohne das OH-terminierte Siloxan, wurden bei 240 °C und 6 bar vorkondensiert. Dann wurden das Polysiloxan wie in Beispiel 1 in gleicher Menge und 0,005 kg Dibutylzinnoxid als Katalysator zu dem Prekondensat zugegeben. Es wurde unter $N_2$-Spülung 1 Stunde nachkondensiert. Danach wurde eine weitere Stunde unter vermindertem Druck (15mbar) nachkondensiert. Das erhaltene Polymerisat wurde wie in Beispiel ① beschrieben weiterverarbeitet und untersucht. Die Ergebnisse sind in der Tabelle gezeigt.

Vergleichsbeispiel ③

Wie in Beispiel ① beschrieben, wurde ein Polyamid-Siloxan-Copolymer aus den nachfolgenden Komponenten auf gleiche Weise synthetisiert und untersucht:
3,6 kg Caprolactam
4,4 kg 11-Aminoundecansäure
0,7 kg Adipinsäure
0,9 kg Hexamethylendiamin
0,38 kg Siloxan TP 3207 ($NH_2$-terminiertes Polysiloxan der Fa. Th. Goldschmidt)
0,02 kg Adipinsäure

Vergleichsbeispiel ④

Wie in Beispiel ① beschrieben, wurde ein Polysiloxanpolyamid aus folgenden Komponenten auf gleiche Weise synthetisiert und untersucht:
3,6 kg Caprolactam
4,4 kg 11-Aminoundecansäure
0,2 kg Hexamethylendiamin
0,7 kg Adipinsäure
0,39 kg Siloxan Q 2-7119 (COOH-terminiertes Polysiloxan der Fa. DOW CORNING)
0,01 kg Hexamethylendiamin
Die Ergebnisse der textiltechnologischen Untersuchungen sind in der nachfolgenden Tabelle gezeigt.

ERKLÄRUNG TABELLE

| | | |
|---|---|---|
| Einlage | = | Einlagestoff Kattun PEG/BW 55/45 |
| Oberstoff | = | Nino® (siliconisierter Oberstoff) |
| Schüttgewicht | = | g/l |
| Klumpen | = | Aussage über das Laufverhalten |
| Zerfall | = | Bei textiltechnischer Beschichtung Bildung von Klumpen im Pulver-Vorratstrog<br>1 = keine<br>2 = starke Klumpen<br>Zerfall der Klumpen<br>1 = sehr leicht<br>3 - 4 = kaum möglich |

| | | |
|---|---|---|
| Auftrag | = | 13 - 15 g/cm$^2$ |
| NRF | = | Normalreißfestigkeit |
| Naßwäsche | = | 3 x 40°C |
| Chem. Reinigung | = | 5 x |
| Reißfestigkeit | = | N/5 cm |

Unter Rückschlag ist dabei das Eindringen des Klebers in den Einlagestoff bis zur Rückseite zu verstehen, welches zur Griffverschlechterung des Verbundes und zum Ankleben der Einlagerückseite an das Fixierwerkzeug führen kann. Der Beurteilungsmaßstab ist wie folgt:

0 = kein Rückschlag
0-1 = wenig Rückschlag
1 = Rückschlag
2 = deutlicher Rückschlag
3 = starker Rückschlag

| | | Beispiel 1 | Beispiel 2 | Vergleichsbeispiel 1 | Vergleichsbeispiel 2 | Vergleichsbeispiel 3 | Vergleichsbeispiel 4 |
|---|---|---|---|---|---|---|---|
| Schmelzbereich °C | | 115-122 | 109-116 | 110-120 | 113-12 | 115-122 | 113-120 |
| Lösungsviskosität $\eta$-rel | | 1,57 | 1,43 | 1,53 | 1,54 | 1,53 | 1,56 |
| Einlage | | KATTUN | dto | dto | dto | dto | dto |
| Oberstoff | | NINO® | dto | dto | dto | dto | dto |
| Schüttgewicht | | 470 | 490 | 540 | 500 | 490 | 530 |
| Klumpen/Zerfall | | 0-1/1 | 1/1 | 1/3 | 2/2 | 3/3-4 | 3/3-4 |
| NRF | 120°C | 4 | 3,5 | - | 2 | - | - |
| | 130 | 4,5 | 4,0 | < 1,5 | 2 | 3,0 | 1,5 |
| | 140 | 4,5 | 4,0 | 3,5 | 3,5 | 4,5 | 3,5 |
| | 150 | 6,5 | 5,5 | 4,5 | 4,5 | 5,0 | 4,5 |
| | 160 | 7,5 | 6,5 | 5,0 | 4,5 | 5,0 | 5,0 |
| Rückschlag | 120 | 0 | 0 | 2 | 1 | 2 | 2 |
| | 130 | 0 | 0 | 2 | 1-2 | 2 | 2 |
| | 140 | 0 | 0 | 2-3 | 2 | 2 | 2 |
| | 150 | 0 | 0-1 | 2-3 | 2-3 | 2-3 | 2-3 |
| | 160 | 0-1 | 1 | 3 | 2-3 | 2-3 | 2-3 |
| 3 x 40° | 120 | 3 | 2,5 | - | 1,5 | | |
| | 130 | 4,5 | 4,0 | < 1,5 | 1,5 | 2,5 | 1,5 |
| | 140 | 4,5 | 4,0 | 3,5 | 3,0 | 3,0 | 3,0 |
| | 150 | 7,5 | 7,0 | 4,5 | 4,0 | 3,5 | 4,0 |
| | 160 | 8,5 | 7,5 | 4,5 | 4,0 | 4,0 | 4,5 |
| 5 x CH,R | 120 | 3,5 | 3,0 | - | 1,5 | | - |
| | 130 | 4,5 | 4,0 | < 1,5 | 1,5 | 2,5 | 1,5 |
| | 140 | 5,5 | 4,5 | 3,0 | 3,5 | 3,5 | 3,0 |
| | 150 | 9,0 | 6,5 | 5,0 | 4,5 | 4,5 | 4,5 |
| | 160 | 10,0 | 7,5 | 6,0 | 6,0 | 5,0 | 5,0 |

## Patentansprüche

1. Polyamid-Siloxan-Copolymer, erhältlich durch gemeinsame Kondensation und Polymerisation auf an sich bekannte Weise Von -Amino-Alkylcarbonsäuren mit 6, 11 oder 12 Kohlenstoffatomen und/oder deren Lactamen, von polyamidbildenden Diaminen, und copolymerisierbaren Monomeren oder Gemischen von Monomeren der Formel I, sowie Dicarbonsäuren

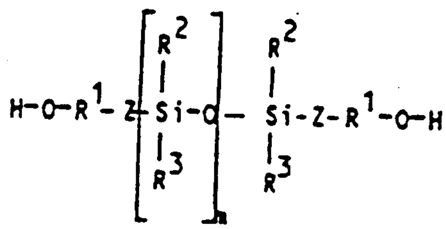

(I)

wobei in I $R^1$ einen divalenten Alkylrest mit 2 bis 36 Kohlenstoffatomen, der geradkettig oder verzweigt sein kann, oder einen $C_1$ bis $C_4$ Polyoxyalkylenrest mit einem zahlenmittleren Molekulargewicht von 50 bis 3000 bedeutet, $R^2$ und $R^3$ , die gleich oder verschieden sein können, Wasserstoff, Benzyl, das mit einem geradkettigen, cyclischen oder verzweigten niederen Alkylrest mit 1 bis 6 Kohlenstoffatomen substituiert sein kann, oder einen cyclischen, geradkettigen oder verzweigten niederen Alkylrest mit 1 bis 6 Kohlenstoffatomen bedeuten, m eine Zahl von 1 bis 50 bedeutet und Z eine direkte Bindung oder Sauerstoff bedeutet, und wobei die polyamidbildenden Diamine und Verbindungen der Formel I einerseits und die Dicarbonsäuren andererseits in äquimolaren Mengen vorliegen und 0,5 bis 15 Gew.% bezogen auf das Gesamtgewicht des eingesetzten Komponenten im Ausgangsgemisch an Verbindungen der Formel I anstelle der entsprechend äquivalenten Menge der Diamine vorhanden sind.

**2.** Polyamid-Siloxan-Copolymer nach Anspruch 1, dadurch erhältlich, daß 60 bis 90 Gew.-% der ω-Amino-Alkylcarbonsäuren mit 6, 11 oder 12 Kohlenstoffatomen und/oder deren entsprechenden Lactamen, und 10 bis 40 Gew.-% von äquimolaren Mengen Diaminen und Dicarbonsäuren, polymerisiert werden, wobei 2 bis 6 Gew.-% der copolymerisierbaren Monomeren der allgemeinen Formel I anstelle der entsprechenden äquivalenten Menge der Diamine eingesetzt werden, wobei sich alle Angaben der Gewichtsprozente auf das Gesamtgewicht der eingesetzten Komponenten im Ausgangsgemisch beziehen.

**3.** Polyamid-Siloxan-Copolymer nach Anspruch 1, dadurch erhältlich, daß 75 bis 85 Gew.-% der ω-Amino-Alkylcarbonsäuren mit 6, 11 oder 12 Kohlenstoffatomen und/oder deren entsprechenden Lactamen, und 15 bis 25 Gew.-% von äquimolaren Mengen Diaminen und Dicarbonsäuren, polymerisiert werden, wobei 2 bis 6 Gew.-% der copolymerisierbaren Monomeren der allgemeinen Formel I anstelle der entsprechenden äquivalenten Menge der Diamine eingesetzt werden, wobei sich alle Angaben der Gewichtsprozente auf das Gesamtgewicht der eingesetzten Komponenten im Ausgangsgemisch beziehen.

**4.** Verfahren zur Herstellung des Polyamid-Siloxan-Copolymers nach Anspruch 1, dadurch gekennzeichnet, daß die Ausgangskomponenten in den in Anspruch 2 angegebenen Mengenverhältnissen kondensiert werden.

**5.** Verfahren zur Herstellung des Polyamid-Siloxan-Copolymers nach Anspruch 1, dadurch gekennzeichnet, daß die Ausgangskomponenten in den in Anspruch 3 angegebenen Mengenverhältnissen kondensiert werden.

**6.** Verwendung der Polyamid-Siloxan-Copolymere nach einem der Ansprüche 1 bis 3 als Heißschmelzkleber für Textilien.

**7.** Verwendung der Polyamid-Siloxan-Copolymere nach einem der Ansprüche 1 bis 3 als Heißschmelzkleber für silikonisierte Textilien.

**8.** Verwendung nach Anspruch 6 oder 7 in Form von Dispersionen.

## Claims

**1.** Polyamide-siloxane copolymer obtainable by joint condensation and polymerisation in a manner known per se of ω-amino-alkylcarboxylic acids with 6, 11 or 12 carbon atoms and/or the lactams thereof, of polyamide-forming diamines and copolymerisable monomers or mixtures of monomers of the formula I, together with dicarboxylic acids

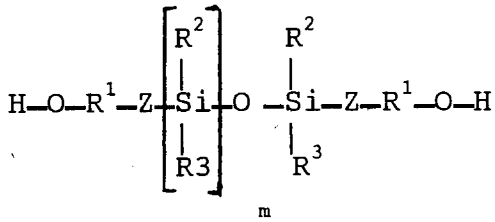

(I)

wherein in I, $R^1$ means a divalent alkyl residue with 2 to 36 carbon atoms, which residue may be unbranched or branched, or a $C_1$ to $C_4$ polyoxyalkene residue with a number average molecular weight of 50 to 3000, $R^2$ and $R^3$, which may be identical or different, mean hydrogen, benzyl, which may be substituted with an unbranched, cyclic or branched lower alkyl residue with 1 to 6 carbon atoms, or a cyclic, unbranched or branched lower alkyl residue with 1 to 6 carbon atoms, m means a number from 1 to 50 and Z means a direct bond or oxygen and wherein the polyamide-forming diamines and compounds of the formula I on the one hand and the dicarboxylic acids on the other hand are present in equimolar quantities and 0.5 to 15 wt.%, related to the total weight of the components used in the starting mixture, of compounds of the formula I are present instead of the corresponding equivalent quantity of the diamines.

**2.** Polyamide-siloxane copolymer according to claim 1 obtainable by polymerising 60 to 90 wt.% of the ω-amino-alkylcarboxylic acids with 6, 11 or 12 carbon atoms and/or the corresponding lactams thereof, and 10 to 40 wt.% of equimolar quantities of diamines and dicarboxylic acids, wherein 2 to 6 wt.% of the copolymerisable monomers of the general formula I are used instead of the corresponding equivalent quantity of the diamines, wherein all weight percentages relate to the total weight of the components used in the starting mixture.

**3.** Polyamide-siloxane copolymer according to claim 1 obtainable by polymerising 75 to 85 wt.% of the ω-amino-alkylcarboxylic acids with 6, 11 or 12 carbon atoms and/or the corresponding lactams thereof, and 15 to 25 wt.% of equimolar quantities of diamines and dicarboxylic acids, wherein 2 to 6 wt.% of the copolymerisable monomers of the general formula I are used instead of the corresponding equivalent quantity of the diamines, wherein all weight percentages relate to the total weight of the components used in the starting mixture.

**4.** Process for the production of polyamide-siloxane copolymers according to claim 1, characterised in that the starting components are condensed in the quantity ratios stated in claim 2.

**5.** Process for the production of polyamide-siloxane copolymers according to claim 1, characterised in that the starting components are condensed in the quantity ratios stated in claim 3.

**6.** Use of the polyamide-siloxane copolymers according to one of claims 1 to 3 as hot-melt adhesives for textiles.

**7.** Use of the polyamide-siloxane copolymers according to one of claims 1 to 3 as hot-melt adhesives for silicone-treated textiles.

**8.** Use according to claim 6 or 7 in the form of dispersions.

**Revendications**

**1.** Copolymère polyamide-siloxane, obtenu par condensation commune et polymérisation, de façon connue en soi, des acides ω- aminoalkylcarboxyliques ayant 6, 11 ou 12 atomes de carbone et/ou de leurs lactames, de diamines formant des polyamides et des monomères ou mélanges de monomères de formule I copolymérisables, ainsi que d'acides dicarboxyliques :

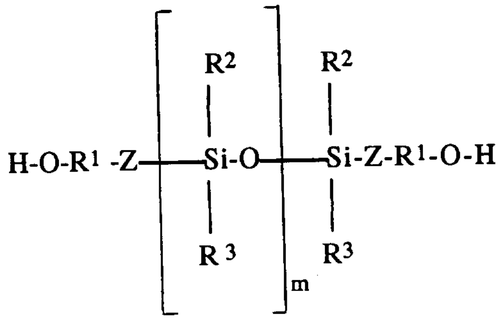

(I)

où dans I $R^1$ représente un reste alkyle divalent ayant 2 à 36 atomes de carbone, pouvant être linéaire ou ramifié, ou un reste polyoxyalkylène en $C_1$ à $C_4$ ayant un poids moléculaire moyen en nombre compris entre 50 et 3000, $R^2$ et $R^3$ qui peuvent être identiques ou différents, représentent l'hydrogène, le benzyle éventuellement substitué avec un reste alkyle inférieur ayant 1 à 6 atomes de carbone, linéaire, cyclique ou ramifié ou un reste alkyle inférieur ayant 1 à 6 atomes de carbone, cyclique linéaire ou ramifié, m est un nombre allant de 1 à 50 et Z représente une liaison directe ou l'oxygène, les diamines formant les polyamides et les composés de formule I, d'une part, et les acides dicarboxyliques, d'autre part, étant présents en quantités équimolaires et 0,5 à 15 % en poids, rapporté au poids total des composants utilisés dans le mélange de départ, de composés de formule I étant présents à la place de la quantité équivalente correspondante des diamines.

**2.** Copolymère polyamide-siloxane selon la revendication **1**, obtenu en polymérisant 60 à 90 % en poids des acides $\omega$-aminoalkylcarboxyliques ayant 6, 11 ou 12 atomes de carbone et/ou de leurs lactames correspondants et 10 à 40 % en poids de quantités équimolaires de diamines et d'acides dicarboxyliques, 2 à 6 % en poids des monomères copolymérisables de formule générale I étant utilisés à la place de la quantité équivalente correspondante des diamines, tous les pourcentages en poids se rapportant au poids total des composants utilisés dans le mélange de départ.

**3.** Copolymère polyamide-siloxane selon la revendication **1**, obtenu en polymérisant 75 à 85 % en poids des acides $\omega$-aminoalkylcarboxyliques ayant 6, 11 ou 12 atomes de carbone et/ou de leurs lactames correspondants et 15 à 25 % en poids de quantités équimolaires de diamines et d'acides dicarboxyliques, 2 à 6 % en poids des monomères copolymérisables de formule générale I étant utilisés à la place de la quantité équivalente correspondante des diamines, tous les pourcentages en poids se rapportant au poids total des composants utilisés dans le mélange de départ.

**4.** Procédé pour la préparation du copolymère polyamide-siloxane selon la revendication **1**, caractérisé en ce que les composants de départ sont condensés dans les proportions indiquées dans la revendication **2**.

**5.** Procédé pour la préparation du copolymère polyamide-siloxane selon la revendication **1**, caractérisé en ce que les composants de départ sont condensés dans les proportions indiquées dans la revendication **3**.

**6.** Utilisation des copolymères polyamide-siloxane selon l'une des revendications **1** à **3** comme adhésif fusionnant à chaud pour les textiles.

**7.** Utilisation des copolymères polyamide-siloxane selon l'une des revendications **1** à **3** comme adhésif fusionnant à chaud pour les textiles.

**8.** Utilisation selon la revendication **6** ou **7** sous forme de suspensions.